# EUROPÄISCHE PATENTSCHRIFT

(11) **EP 3 056 413 B1**
(45) Veröffentlichungstag und Bekanntmachung des Hinweises auf die Patenterteilung: **19.09.2018**
(21) Anmeldenummer: 16000355.4
(22) Anmeldetag: 12.02.2016
(51) Int. Cl.: B62D 25/14, B62D 25/08

(54) **KAROSSERIE FÜR EIN KRAFTFAHRZEUG UND ZUGEHORIGES KRAFTFAHRZEUG**
BODY FOR A MOTOR VEHICLE AND ASSOCIATED MOTOR VEHICLE
CARROSSERIE POUR VEHICULE AUTOMOBILE ET VEHICULE AUTOMOBILE CORRESPONDANT

(30) Priorität: 13.02.2015 DE 102015001919
(43) Veröffentlichungstag der Anmeldung: 17.08.2016
(73) Patentinhaber: Audi AG, 85045 Ingolstadt (DE)
(72) Erfinder: Urban, Tobias, DE - 74354 Besigheim-Ottmarsheim (DE); Braun, Tobias, DE - 74074 Heilbronn (DE); Brauer, Martin, DE - 74074 Heilbronn (DE)
(74) Vertreter: Patzelt, Heike Anna Maria

(56) Entgegenhaltungen:
- EP-A1- 0 845 404
- EP-A1- 2 298 628
- DE-A1- 4 139 466
- DE-A1- 19 819 446
- FR-A1- 2 986 761
- GB-A- 2 482 953

## Beschreibung

Die Erfindung betrifft eine Karosserie für ein Kraftfahrzeug, mit an beiden Längsseiten der Karosserie angeordneten Schwellern und A-Säulen sowie mit zwei Längsträgern und einem sich quer zur Längsrichtung erstreckenden Querträger, der in Fahrtrichtung gesehen vor den Schwellern und den A-Säulen und hinter den Längsträgern angeordnet ist.

Karosserien für Kraftfahrzeuge sind in den meisten Fällen aus Stahl, aus Aluminium oder einer Kombination davon hergestellt. Eine Karosserie umfasst normalerweise einen Querträger, der auch als Stirnwandquerträger bezeichnet wird und Kräfte von den vorderen Längsträgern aufnimmt und diese Kräfte an die umliegende Struktur, insbesondere an die A-Säulen und an einen in die Karosserie integrierten Tunnel verteilt. Der Querträger bildet das vordere Ende der Fahrgastsicherheitszelle.

Herkömmliche Stirnwandquerträger sind zumeist in Blechbauweise hergestellt und erstrecken sich von einer Längsseite quer zur gegenüberliegenden Längsseite. Es ist bekannt, im Fußraumbereich an beiden Seiten jeweils ein zusätzliches Blechbauteil als Aussteifung vorzusehen.

Daneben sind auch Stirnwandquerträger in Profilbauweise gebräuchlich, die eine gebogene Form aufweisen können. Mittels eines Adapters kann ein Formschluss zur A-Säule geschaffen sein.

Es ist auch bekannt, einen Fußraumquerträger in Blechbauweise einzusetzen, der sich von einer Längsseite der Karosserie zur gegenüberliegenden Längsseite erstreckt und zumindest näherungsweise symmetrisch ausgebildet ist. Allerdings ist kein Formschluss zur A-Säule vorhanden, lediglich ein Anschlag in Querrichtung (Y-Richtung).

Eine weitere bekannte Variante eines in Blechbauweise hergestellten Stirnwandquerträgers weist beidseitig im Radraumbereich großflächige Zusatzteile als Schutzschilde auf, die über Schraubverbindungen mit dem Stirnwandquerträger verbunden sind. Durch diese Schraubverbindung ergibt sich ein Formschluss in Längsrichtung (X-Richtung) zwischen dem Stirnwandquerträger und den Zusatzteilen.

Daneben sind auch in Blechbauweise hergestellte Stirnwandquerträger bekannt, bei denen kein Formschluss zur A-Säule vorhanden ist, lediglich ein Anschlag in Querrichtung (Y-Richtung).

Bei Unfällen, insbesondere bei einem Frontalaufprall mit geringer Überdeckung (small overlap) treten Trennstellen zwischen dem Querträger und den umgebenden Bauteilen auf, wodurch der Kraftschluss bei einem Aufprall unterbrochen wird. Zudem ist der für die Herstellung der verschraubten Verbindungen erforderliche Aufwand erheblich.

Aus DE 41 39 466 A1 ist eine Vorderkarosseriestruktur eines Kraftfahrzeugs bekannt. Diese umfasst ein Paar Trägerelemente, die auf gegenüberliegenden Seiten eines Abschnitts zwischen einer Vorderkarosserie und einer Fahrgastzelle des Fahrzeugs angeordnet sind und eine Festigkeit haben, sowie ein Paar vorderer Seitenrahmen, die in Längsrichtung des Fahrzeugs angeordnet sind. Jeder der vorderen Seitenrahmen enthält einen vorderen Abschnitt, einen hinteren Abschnitt, der mit einem der Trägerelemente verbunden ist, und eine stark deformierbare Einrichtung, die eine stark kompressive Deformation eines Abschnitts des vorderen Seitenrahmens vor dem hinteren Abschnitt des vorderen Seitenrahmens zulässt, wenn das Fahrzeug einen Frontalaufprall erfährt.

In EP 2 298 628 A1 ist ein Fahrzeugkarosserieaufbau im Bereich der A-Säulen unten und Schweller beschrieben, mit jeweils einer A-Säule an beiden Karosserieseiten, welche in ihrem Säulenaufbau im Schwellerbereich ein etwa vertikal und in Fahrzeuglängsrichtung ausgerichtetes A-Säulen-Unteninnenstahlblech und ein A-Säulen-Untenaußenstahlblech aufweist, und mit einem angeschlossenen Schweller als Längshohlträger mit einem darin aufgenommenen längsverlaufenden Schwellerverstärkungsprofil. Der Schweller weist ein Schweller-Innenstahlblech auf, mit einer Schwellerinnenfläche, die fluchtend zur Fläche des A-Säulen-Unteninnenstahlblechs als erste Schubfläche verläuft, wobei als Schwellerverstärkungsprofil ein Hutstahlprofil mit den Huträndern außen am Schweller-Innenstahlblech verbunden ist, wobei das Schweller-Innenstahlblech an der Oberseite nach außen in den Bereich der Hutprofilhöhe zu einer etwa horizontal verlaufenden Schulter und anschließend zu einem vertikalen nach oben stehenden Türdichtflansch gebogen ist, wobei die vertikal ausgerichtete Hutdecke des Hutstahlprofils fluchtend zur Türflanschfläche des im A-Säulen-Untenaußenstahlblech weitergeführten Türdichtflansches als zweite Schubfläche verläuft.

Der Erfindung liegt daher die Aufgabe zugrunde, eine Karosserie für ein Kraftfahrzeug anzugeben, die bei einem Aufprall mit geringer Überdeckung ein verbessertes Verhalten zeigt und einfacher herstellbar ist.

Zur Lösung dieser Aufgabe ist bei einer Karosserie der eingangs genannten Art erfindungsgemäß vorgesehen, dass der mit den Schwellern, den A-Säulen und den Längsträgern verbundene Querträger an beiden gegenüberliegenden Längsseiten jeweils eine sich im Wesentlichen in Querrichtung erstreckende flächige Blechstruktur umfasst, die sich nach unten bis in den Fußraum erstreckt und die Schweller, die A-Säulen und die Längsträger zur Ermöglichung einer Kraftübertragung von den Schwellern, den A-Säulen und den Längsträgern über die flächigen Blechstrukturen zum Querträger überdeckt.

Die Erfindung beruht auf der Idee, einen an sich bekannten Querträger, insbesondere einen Stirnwandquerträger, mit einer flächigen Blechstruktur zu erweitern, so dass der Querträger und die an beiden Seiten angeformten flächigen Blechstrukturen integral, das heißt als einstückiges Bauteil, ausgebildet sind. Dadurch ergibt sich der Vorteil, dass die Querlastpfade im Fußraum der Karosserie in den durch den Querträger gebildeten Querlastpfad integriert sind. Da die flächigen Blechstrukturen die Schweller, die A-Säulen und die Längsträger überdecken, kann eine Kraftübertragung von diesen Komponenten über die flächigen Blechstrukturen auf den Querträger erfolgen. Im Falle eines Aufpralls ergibt sich dadurch der Vorteil, dass keine Trennung der einzelnen Komponenten erfolgt, wodurch die Robustheit der Karosserie bei einem Aufprall erhöht wird. Ein weiterer Vorteil ist daran zu sehen, dass sich die Anzahl der Bauteile verringert und dass auf Verbindungselemente, beispielsweise Schraubverbindungen, verzichtet werden kann. Somit ergeben sich auch Einsparmöglichkeiten bei der Montage der Karosserie.

Bei der erfindungsgemäßen Karosserie wird es besonders bevorzugt, dass der Querträger über seine Blechstruktur formschlüssig mit den Schwellern und/oder den A-Säulen und/oder den Längsträgern verbunden ist. Die formschlüssige Verbindung kann beispielsweise durch Schweißnähte gebildet sein.

Eine Weiterbildung der Erfindung sieht vor, dass der Querträger im Bereich der Blechstrukturen Profilabschnitte aufweist, die sich jeweils nach außen und zumindest näherungsweise horizontal erstrecken. Dementsprechend weist der Querträger neben seinem "Hauptprofil" im Bereich der Blechstrukturen weiteren ähnlich aufgebaute Profilabschnitte auf, die beispielsweise Verstärkungen in horizontaler Richtung aufweisen können. Alternativ oder zusätzlich kann im Bereich der Blechstrukturen auch ein Hohlprofil vorgesehen sein.

Mit besonderem Vorteil ist bei der erfindungsgemäßen Karosserie vorgesehen, dass die erwähnten Profilabschnitte im Bereich der Blechstrukturen in den Querträger übergehen. Somit bildet sich ein Lastpfad von dem unteren äußeren Ende der Profilabschnitte der Blechstrukturen aus, der nach innen und nach oben bis zum Querträger verläuft. Bei einem seitlichen Aufprall können die dabei entstehenden Kräfte somit über die Profilabschnitte im Bereich der Blechstrukturen zum Querträger übertragen werden, wodurch sich eine erhöhte Robustheit bei einem Aufprall ergibt. Durch die einstückige, homogene Ausgestaltung des Querträgers ergibt sich auch eine erhöhte Robustheit bei unterschiedlichen Radstellungen, da sich in Abhängigkeit des Auftreffwinkels unterschiedliche Auftreffpositionen des Rads ergeben.

Bei der erfindungsgemäßen Karosserie wird es besonders bevorzugt, dass der Querträger Bereiche mit unterschiedlichen Wandstärken aufweist. Durch diese Maßnahme kann der Querträger optimal auf vorhandene Belastungen abgestimmt werden, gleichzeitig kann die Masse des Querträgers minimiert werden.

Alternativ oder zusätzlich kann es bei der erfindungsgemäßen Karosserie vorgesehen sein, dass der Querträger Bereiche mit unterschiedlichen Werkstoffeigenschaften aufweist. In diesem Zusammenhang können beispielsweise Stähle eingesetzt werden, die sich hinsichtlich ihrer Werkstoffeigenschaften unterscheiden. Beispielsweise können Stähle mit unterschiedlicher Festigkeit und/oder unterschiedlicher Bruchdehnung eingesetzt werden. Es ist auch denkbar, aus Stahl hergestellte Komponenten mit aus Aluminium hergestellten Komponenten zu kombinieren.

Eine zweckmäßige Weiterbildung der erfindungsgemäßen Karosserie sieht vor, dass der Querträger wenigstens eine Durchgangsöffnung aufweist. Die Durchgangsöffnung kann einen Durchtritt für eine Längssäule oder einen Kabelbaum bilden.

Daneben betrifft die Erfindung ein Kraftfahrzeug, das eine Karosserie der beschriebenen Art aufweist.

Weitere Vorteile und Einzelheiten der Erfindung werden nachfolgend anhand eines Ausführungsbeispiels unter Bezugnahme auf die Zeichnungen erläutert. Die Zeichnungen sind schematische Darstellungen und zeigen:
- Fig. 1: einen Querträger einer erfindungsgemäßen Karosserie in einer Ansicht von vorne;
- Fig. 2: den in Fig. 1 gezeigten Querträger mit eingezeichneten Lastpfaden; und

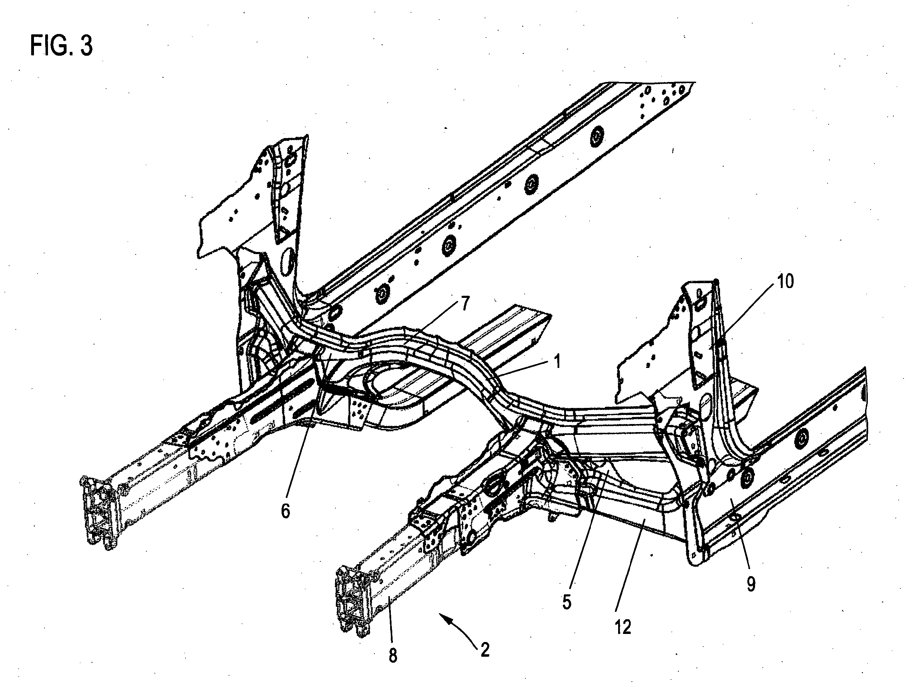

- Fig. 3: eine perspektivische Ansicht einer erfindungsgemäßen Karosserie.

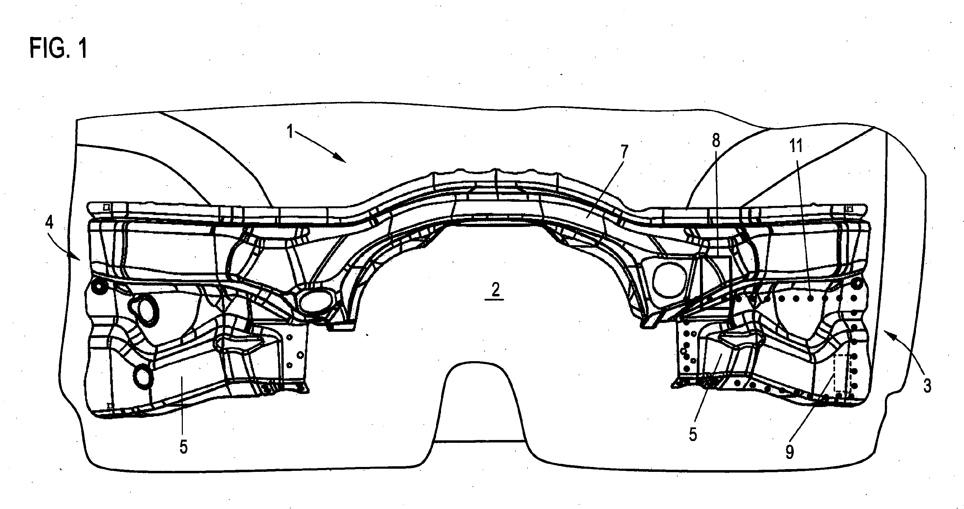

Fig. 1 zeigt einen Querträger 1 in einer Ansicht von vorne, der als Stirnwandquerträger ausgebildet ist und Bestandteil einer Karosserie 2 eines Kraftfahrzeugs ist. Die Karosserie 2 ist in Fig. 1 aus Gründen der besseren Übersichtlichkeit lediglich schematisch dargestellt.

Der Querträger 1 erstreckt sich von einer Längsseite 3 der Karosserie 2 bis zur gegenüberliegenden Längsseite 4 und umfasst an beiden Seiten jeweils eine flächige Blechstruktur 5, 6, die näherungsweise trapezförmig ausgebildet ist. An der Oberseite gehen die Blechstrukturen 5, 6 in einen Profilabschnitt 7 des Querträgers 1 über, der näherungsweise symmetrisch zur Mitte der Karosserie 2 ausgebildet und im mittleren Bereich nach oben gewölbt ist. Der sich in Querrichtung erstreckende Profilabschnitt 7 und die Blechstrukturen 5, 6 sind einstückig, das heißt als integrales Bauteil ausgebildet. In dem dargestellten Ausführungsbeispiel ist der aus den Blechstrukturen 5, 6 und dem Profilabschnitt 7 bestehende Querträger 1 durch ein Schweißverfahren hergestellt. Der Querträger 1 umfasst eine Reihe von sich in Längsrichtung der Karosserie 2 erstreckenden Profilabschnitten, durch die sich die Steifigkeit erhöht. Zudem sind bestimmte Bereiche für die Montage weiterer Komponenten geformt und ausgebildet.

In dem dargestellten Ausführungsbeispiel besteht der Querträger 1 aus einer Stahllegierung, der sich in Querrichtung erstreckende Profilabschnitt 7 weist in Querrichtung unterschiedliche Wandstärken und Profile auf.

In Fig. 1 ist auf der rechten Seite schematisch die Position eines Längsträgers 8 eingezeichnet, der sich in Längsrichtung vor dem Querträger 1 erstreckt. Ebenso ist auf der rechten Seite von Fig. 1 die Position eines Schwellers 9 dargestellt, der sich in Längsrichtung hinter den Querträger 1 erstreckt. Die gegenüberliegende, in Fig. 1 linke Seite ist spiegelbildlich ausgebildet. In Fig. 1 erkennt man, dass die Blechstrukturen 5, 6 sich nach unten bis in den Fußraum erstrecken, dort sind die Blechstrukturen 5, 6 mit einer Bodenstruktur der Karosserie 2 verbunden. Die Blechstrukturen 5, 6 überdecken die Schweller 9, die Längsträger 8 sowie schematisch dargestellte A-Säulen 10, die sich in Längsrichtung hinter dem Querträger 1 befinden. Auf diese Weise dient ein durch eine gepunktete Linie 11 markierter Bereich der Blechstrukturen 5, 6 der Lastverteilung. Bei einem Frontalaufprall wird eine Längskraft über den Längsträger 8 auf eine der Blechstrukturen 5, 6 des Querträgers 1 übertragen. Da der Querträger 1 auch fest mit der A-Säule 10 und dem Schweller 9 verbunden ist, kann die beim Aufprall entstehende Kraft zu diesen Komponenten der Karosserie 2 weitergeleitet werden. Dadurch ergibt sich der Vorteil, dass die Karosserie 2 besonders robust bei einem Aufprall ist, da keine Trennstellen entstehen. Ebenso wenig können Schraubverbindungen oder Nietverbindungen zerstört werden, die bei herkömmlichen Karosserien Schwachstellen darstellen.

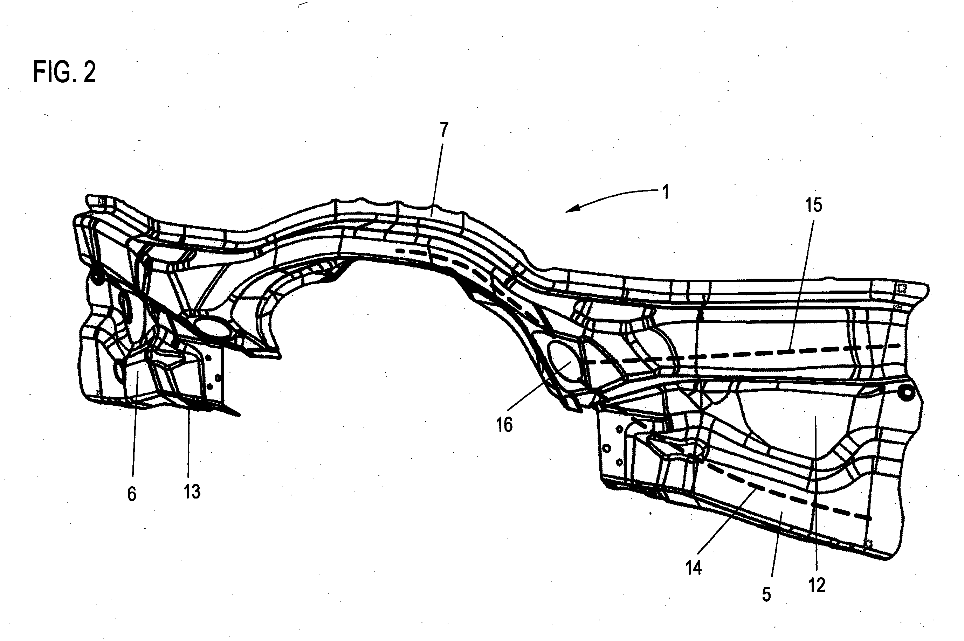

Fig. 2 ist eine ähnliche Ansicht wie Fig. 1 und zeigt den Querträger 1 in einer Ansicht von vorne. Die beiden Blechstrukturen 5, 6 besitzen in ihrem unteren Bereich Profilabschnitte 12, 13, die sich zumindest näherungsweise horizontal in Fahrzeuglängsrichtung nach vorne erstrecken. Die Profilabschnitte 12, 13 verlaufen leicht abfallend nach außen und sind mit dem Fußraum verbunden.

In Fig. 2 sind zusätzlich Lastpfade eingezeichnet, die angeben, wie eine bei einem Seitenaufprall einwirkende Kraft übertragen wird. Ein unterer Lastpfad 14 beginnt am äußeren Ende des Profilabschnitts 12 der Blechstruktur 5 und verläuft entlang des Profilabschnitts 12 schräg nach oben bis zum mittleren Profilabschnitt 7 des Querträgers 1. Ein weiterer Lastpfad 15 verläuft vom äußeren Ende der Blechstruktur 5 näherungsweise horizontal nach innen und vereinigt sich im Bereich einer Ausnehmung 16 mit dem unteren Lastpfad 14. Die Ausnehmung 16 dient als Durchgangsöffnung für ein Lenkrad.

## Patentansprüche

1. Karosserie (2) für ein Kraftfahrzeug, mit an beiden Längsseiten der Karosserie angeordneten Schwellern (9) und A-Säulen (10) sowie mit zwei Längsträgern (8) und einem sich quer zur Längsrichtung erstreckenden Querträger (1), der in Fahrtrichtung gesehen vor den Schwellern (9) und den A-Säulen (10) und hinter den Längsträgern (8) angeordnet ist, **dadurch gekennzeichnet,**
**dass** der mit den Schwellern (9), den A-Säulen (10) und den Längsträgern (8) verbundene Querträger (1) an beiden gegenüberliegenden Längsseiten (3, 4) jeweils eine sich im Wesentlichen in Querrichtung erstreckende flächige Blechstruktur (5, 6) umfasst, die sich nach unten bis in den Fußraum erstreckt und die Schweller (9), die A-Säulen (10) und die Längsträger (8) zur Ermöglichung einer Kraftübertragung von den Schwellern (9), den A-Säulen (10) und den Längsträgern (8) über die flächigen Blechstrukturen (5, 6) zum Querträger (1) überdeckt.

2. Karosserie nach Anspruch 1,
**dadurch gekennzeichnet,**
**dass** der Querträger (1) über seine Blechstrukturen (5, 6) formschlüssig mit den Schwellern (9) und/oder den A-Säulen (10) und/oder den Längsträgern (8) verbunden ist.

3. Karosserie nach Anspruch 1 oder 2,
**dadurch gekennzeichnet,**
**dass** der Querträger (1) im Bereich der Blechstrukturen (5, 6) Profilabschnitte (12, 13) aufweist, die sich jeweils nach außen und zumindest näherungsweise horizontal erstrecken.

4. Karosserie nach Anspruch 3,
**dadurch gekennzeichnet,**
**dass** die Profilabschnitte (12, 13) im Bereich der Blechstrukturen (5, 6) in den Querträger (1) übergehen.

5. Karosserie nach einem der vorangehenden Ansprüche,
**dadurch gekennzeichnet,**
**dass** der Querträger (1) Bereiche mit unterschiedlichen Wandstärken aufweist.

6. Karosserie nach einem der vorangehenden Ansprüche,
**dadurch gekennzeichnet,**
**dass** der Querträger (1) Bereiche mit unterschiedlichen Werkstoffeigenschaften aufweist.

7. Karosserie nach einem der vorangehenden Ansprüche,
**dadurch gekennzeichnet**,
der Querträger (1) wenigstens eine Durchgangsöffnung aufweist.

8. Kraftfahrzeug, umfassend eine Karosserie nach einem der Ansprüche 1 bis 7.

## Claims

1. Body (2) for a motor vehicle, with sills (9) and A-pillars (10) arranged on both longitudinal sides of the body and with two longitudinal beams (8) and a cross member (1) extending perpendicular to the longitudinal direction, which as viewed in travelling direction is arranged in front of the sills (9) and the A-pillars (10) and behind the longitudinal beams (8),
**characterised in that**
the cross member (1) connected to the sills (9), the A-pillars (10) and the longitudinal beams (8) on both opposite longitudinal sides (3, 4) respectively comprises a sheet metal structure (5, 6) which extends substantially flat in transverse direction, which extends downwards into the foot space and covers the sills (9), the A-pillars (10) and the longitudinal beams (8) to allow a transfer of force from the sills (9), the A-pillars (10) and the longitudinal beams (8) via the flat sheet metal structures (5, 6) to the cross member (1).

2. Body according to claim 1,
**characterised in that**
the cross member (1) is connected by its sheet metal structures (5, 6) in a form-fitting manner to the sills (9) and/or the A-pillars (10) and/or the longitudinal beams (8).

3. Body according to claim 1 or 2,
**characterised in that**
the cross member (1) in the region of the sheet metal structures (5, 6) has profile sections (12, 13), which extend respectively outwardly and at least approximately horizontally.

4. Body according to claim 3,
**characterised in that**
the profile sections (12, 13) in the region of the sheet metal structures (5, 6) merge into the cross member (1).

5. Body according to any of the preceding claims,
**characterised in that**
the cross member (1) has areas with different wall thicknesses.

6. Body according to any of the preceding claims,
**characterised in that**
the cross member (1) has areas with different material properties.

7. Body according to any of the preceding claims,
**characterised in that**
the cross member (1) has at least one through opening.

8. Motor vehicle, comprising a body according to any of claims 1 to 7.

## Revendications

1. Carrosserie (2) pour un véhicule automobile, avec des montants avant (10) et des bas de caisse (9) agencés au niveau des deux côtés longitudinaux de la carrosserie ainsi qu'avec deux poutres longitudinales (8) et une poutre transversale (1) qui s'étend transversalement par rapport à la direction longitudinale et qui est agencée, vue dans le sens de la marche, devant les bas de caisse (9) et les montants avant (10) et derrière les poutres longitudinales (8),
**caractérisée en ce que** la poutre transversale (1) reliée aux bas de caisse (9), aux montants avant (10) et aux poutres longitudinales (8) comprend au niveau des deux côtés longitudinaux opposés (3, 4) à chaque fois une structure en tôle surfacique (5, 6) qui s'étend globalement dans la direction transversale, qui s'étend vers le bas jusqu'à l'espace des pieds et qui recouvre les bas de caisse (9), les montants avant (10) et les poutres longitudinales (8) afin de permettre un transfert de force des bas de caisse (9), des montants avant (10) et des poutres longitudinales (8) à la poutre transversale (1) par l'intermédiaire des structures en tôle surfaciques (5, 6).

2. Carrosserie selon la revendication 1,
**caractérisée en**
**ce que** la poutre transversale (1) est reliée par concordance de forme, par l'intermédiaire de ses structures en tôle (5, 6) et/ou aux bas de caisse (9) et/ou aux montants avant (10) et/ou aux poutres longitudinales (8).

3. Carrosserie selon la revendication 1 ou 2,
**caractérisée en**
**ce que** la poutre transversale (1) comporte dans la zone des structures en tôle (5, 6) des tronçons de profilé (12, 13) qui s'étendent à chaque fois vers l'extérieur et au moins à peu près horizontalement.

4. Carrosserie selon la revendication 3,
**caractérisée en**
**ce que** les tronçons de profilé (12, 13) sont en continuité avec la poutre transversale (1) dans la zone des structures en tôle (5, 6).

5. Carrosserie selon l'une quelconque des revendications précédentes,
**caractérisée en**
**ce que** la poutre transversale (1) comporte des zones avec des épaisseurs de paroi différentes.

6. Carrosserie selon l'une quelconque des revendications précédentes,
**caractérisée en**
**ce que** la poutre transversale (1) comporte des zones avec des propriétés de matériau différentes.

7. Carrosserie selon l'une quelconque des revendications précédentes,
**caractérisée en**
**ce que** la poutre transversale (1) comporte au moins une ouverture de passage.

8. Véhicule automobile, comprenant une carrosserie selon l'une quelconque des revendications 1 à 7.
